(19) Europäisches Patentamt
European Patent Office
Office européen des brevets

(11) **EP 4 307 631 B1**

(12) **EUROPEAN PATENT SPECIFICATION**

(45) Date of publication and mention
of the grant of the patent:
**09.04.2025 Bulletin 2025/15**

(21) Application number: **22770240.4**

(22) Date of filing: **14.02.2022**

(51) International Patent Classification (IPC):
*H04L 43/16* (2022.01)    *H04L 43/0852* (2022.01)
*H04L 41/0668* (2022.01)    *H04L 41/0823* (2022.01)
*H04L 41/0816* (2022.01)

(52) Cooperative Patent Classification (CPC):
**H04L 43/16; H04L 41/0816; H04L 43/0852;**
H04L 41/0668; H04L 41/0836

(86) International application number:
**PCT/CN2022/076140**

(87) International publication number:
**WO 2022/193885 (22.09.2022 Gazette 2022/38)**

(54) **USER ACCESS PROCESSING**

BENUTZERZUGANGSVERARBEITUNG

TRAITEMENT D'ACCÈS D'UTILISATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.03.2021 CN 202110281152**

(43) Date of publication of application:
**17.01.2024 Bulletin 2024/03**

(73) Proprietor: **Huawei Technologies Co., Ltd.
Longgang
Shenzhen, Guangdong 518129 (CN)**

(72) Inventors:
• **GUO, Yan**
**Shenzhen, Guangdong 518129 (CN)**
• **CHEN, Hongguo**
**Shenzhen, Guangdong 518129 (CN)**

(74) Representative: **Maiwald GmbH
Engineering
Elisenhof
Elisenstrasse 3
80335 München (DE)**

(56) References cited:
**CN-A- 102 006 189    CN-A- 106 685 818
CN-A- 106 685 818    CN-A- 111 953 615**

## Description

This application claims priority to Chinese Patent Application No. CN202110281152.3, filed on March 16, 2021 and entitled "PROCESSING METHOD FOR USER ACCESS AND RELATED APPARATUS".

## TECHNICAL FIELD

Embodiments of this application relate to the field of communication technologies, and specifically, to a processing method, computer program product, computer-readable storage medium, and a related system for user access.

## BACKGROUND

A broadband remote access server (broadband remote access server, BRAS) is an access gateway oriented to a broadband network application. The BRAS is located at an edge of a network and serves as a bridge between the network and user equipment. The BRAS mainly complete access control of the user equipment, and the like.

Based on service requirements, the existing BRAS may be classified into a cold backup solution and a hot backup solution to respond to a user access request. In the described cold backup solution, subscriber entry information is not backed up synchronously between an active BRAS and a backup BRAS. After detecting that the active BRAS is faulty, a user needs to dial up again, and establish subscriber entry information on the backup BRAS, to access a network on the backup BRAS. In the hot backup solution, a backup BRAS with a same configuration as an active BRAS is used to implement backup. Subscriber entry information is synchronized between the active BRAS and the backup BRAS in real time. Once a link fault or a device fault occurs on the active BRAS, the backup BRAS is upgraded to the active BRAS, to respond to a user access request. It should be understood that, in the cold backup solution, response time of different BRASs to MAC of user equipment is controlled mainly through a delay of an odd media access control (media access control, MAC) address and a delay of an even MAC address that are configured on an access interface, or a device that can be used as the active BRAS to respond to the user access request is controlled based on a virtual router redundancy protocol (virtual router redundancy protocol, VRRP) priority bound to the access interface. In the hot backup solution, an active/backup relationship between devices is mainly negotiated based on the VRRP priority, so as to implement quick switching to the backup BRAS when a link fault occurs or the active BRAS is faulty.

Although the existing BRAS supports user access in the cold backup solution and the hot backup solution, responding to the user access request depends on the delay and the VRRP priority that are configured on the access interface of the BRAS, so as to control a BRAS from which the user accesses the network, thereby avoiding a case in which the user fails to get access due to a BRAS fault or a link fault. However, in a scenario in which no fault occurs on a physical link but a fault occurs on a third-party authentication server, if the BRAS serving as an active device still responds to the user access request based on the current delay and VRRP priority that are configured on the access interface, the user may fail to get access on the selected active device. Consequently, responding to the user access request based on the current cold backup solution and hot backup solution cannot avoid a case in which a user fails to get access due to a non-link fault, and user access experience is poor.

Document CN 106 685 818 A discloses a message feedback method and device.

## SUMMARY

Embodiments of this application provide a processing method for user access and a related apparatus. An active device configured to respond to a user access request is dynamically adjusted based on a user access failure rate corresponding to an access interface, so that the user access request can be responded to in time even when a series of non-link faults such as a fault on a third-party authentication server occur, thereby improving a user access success rate.

The present invention is defined by the appended claims. Insofar, according to a first aspect, an embodiment of this application provides a processing method for user access, where the processing method may include: A first broadband remote access server BRAS determines a user access failure rate corresponding to a first access interface on the first BRAS; the first BRAS adjusts a response threshold of the first access interface from a first value to a second value when the user access failure rate corresponding to the first access interface is greater than or equal to a first threshold, where a corresponding response speed of responding to a user access request based on the first value is faster than a corresponding response speed of responding to the user access request based on the second value.

In the foregoing manner, a larger user access failure rate indicates a lower probability of successful access when user equipment accesses a network through an access interface corresponding to a current BRAS. In this case, the user equipment needs to access the network through another BRAS, and the another BRAS responds to the user access request of the user equipment. Therefore, compared with that the first BRAS serving as a current active device always responds to the user access request through an initial response value (hereinafter referred to as the first value) configured by the response threshold of the first access interface, in this embodiment of this application, the first BRAS determines the user access failure rate corresponding to the first access interface, and when the user access failure rate corresponding to the first access interface is greater than or equal to the first threshold, dynamically adjusts the response threshold of the first access interface from the first value to the second value. In this way, a corresponding response speed of responding to the user access request based on the adjusted second value is slower than a corresponding response speed of responding to the user access request based on the first value. Further, a corresponding response speed of responding to the user access request by the second BRAS originally serving as a backup device based on a value corresponding to a response threshold of the second access interface is faster than a corresponding response speed of responding to the user access request by the first BRAS based on the second value. In this way, when receiving the user access request, the first BRAS does not preferentially respond to the user access request, but the second BRAS preferentially responds to the user access request through the second access interface. In this way, the user equipment may receive the response message fed back by the second BRAS, and access the network from the second BRAS with a low user access failure rate. In other words, the active device that responds to the user access request is dynamically adjusted based on the user access failure rate corresponding to the access interface, so that the user access request can be responded to in time even when a series of non-link faults such as a fault on a third-party authentication server occur, thereby improving a user access success rate, and greatly improving user experience.

Optionally, in some examples, after the first BRAS adjusts the response threshold of the first access interface from the first value to the second value, the processing method further includes: The first BRAS adjusts the response threshold of the first access interface from the second value back to the first value when the user access failure rate corresponding to the first access interface is less than a second threshold, where the second threshold is less than the first threshold; and the first BRAS responds to the user access request through the first access interface based on the first value.

In the foregoing manner, the first BRAS adjusts the response threshold of the first access interface from the first value to the second value when the user access failure rate corresponding to the first access interface is greater than or equal to the first threshold, so that after receiving the user access request, the first BRAS does not preferentially respond to the user access request, the first BRAS further determines whether the user access failure rate corresponding to the first access interface is less than the second threshold. The first BRAS adjusts the response threshold of the first access interface from the second value back to the first value when the user access failure rate corresponding to the first access interface is less than the second threshold, so that the user access request is preferentially responded based on the first value. This not only improves the user access success rate, greatly improves user experience, but also enriches application scenarios.

Optionally, in some other examples, the response threshold of the first access interface includes a first response delay. The first BRAS adjusts the response threshold of the first access interface from the first value to the second value, including: the first BRAS adjusts the first response delay of the first access interface from a first delay value to a second delay value, where the first delay value is less than the second delay value.

In the foregoing manner, because the response threshold may include a response delay, the response threshold of the first access interface may include the first response delay. In this case, the first BRAS may adjust the first response delay of the first access interface from the first delay value to the second delay value when the user access failure rate corresponding to the first access interface is greater than or equal to the first threshold, and the adjusted second delay value is greater than the first delay value. In this way, the first BRAS may delay responding to the user access request based on the second delay value, and the adjusted second delay value is greater than a value corresponding to the second response delay of the second access interface in the second BRAS. Therefore, after receiving the user access request sent by the user equipment, the second BRAS may preferentially respond to the user access request based on the value corresponding to the second response delay of the second access interface.

Optionally, in some other examples, the first response delay includes a delay corresponding to a media access control MAC address. It should be noted that the MAC may include but is not limited to an odd MAC address or an even MAC address, and the delay corresponding to the MAC address may include but is not limited to a delay corresponding to the odd MAC address or a delay corresponding to the even MAC address. The described delay corresponding to the odd MAC address may be understood as a delay value used to respond to a user access request sent by the user equipment with the odd MAC address when the MAC address of the user equipment is the odd MAC address. Similarly, the described delay corresponding to the even MAC address may be understood as a delay value used to respond to a user access request sent by the user equipment with the even MAC address when the MAC address of the user equipment is the even MAC address.

Optionally, in some other examples, the response threshold includes a virtual router redundancy protocol VRRP priority, and the first BRAS adjusts the response threshold of the first access interface from a first value to a second value, including: The first BRAS adjusts the VRRP priority bound to the first access interface from a first priority to a second priority, where the first priority is higher than the second priority.

In the foregoing manner, the response threshold may include a VRRP priority. Therefore, the first BRAS may specifically adjust the VRRP priority bound to the first access interface from the first priority to the second priority when the user access failure rate corresponding to the first access interface is greater than or equal to the first threshold, and the adjusted second priority is less than the first priority. In this way, the first BRAS may not respond to the user access request based on the second priority. In addition, when the VRRP priority of the second access interface in the second BRAS is a third priority, the adjusted second priority is less than the third priority. Based on this, after receiving the user access request sent by the user equipment, the second BRAS may preferentially respond to the user access request based on the third priority corresponding to the second access interface.

Optionally, in some other examples, the first BRAS determines a user access failure rate corresponding to a first access interface on the first BRAS, including: The first BRAS determines a quantity of dialing failures and a total quantity of dialing attempts of a user who gets access through the first access interface; and the first BRAS determines the user access failure rate corresponding to the first access interface based on the quantity of dialing failures and the total quantity of dialing attempts of the user.

Optionally, in some other examples, after the first BRAS adjusts the response threshold of the first access interface from the first value to the second value, the processing method further includes: the first BRAS sends a processing message to a second BRAS, where the processing message indicates the second BRAS to respond to the user access request based on a response value of a second access interface, and a corresponding response speed of responding to the user access request by the second BRAS based on the response value of the second access interface is faster than a corresponding response speed of responding to the user access request by the first BRAS based on the second value.

Optionally, in some other examples, the processing method further includes: The first BRAS configures the first threshold or the second threshold through a command line instruction.

According to a second aspect, an embodiment of this application provides a first broadband remote access server BRAS, where the first broadband remote access server BRAS may include: a determining unit, configured to determine a user access failure rate corresponding to a first access interface on the first BRAS; and an adjustment unit, configured to adjust a response threshold of the first access interface from a first value to a second value when the user access failure rate corresponding to the first access interface is greater than or equal to a first threshold, where a corresponding response speed of responding to a user access request based on the first value is faster than a corresponding response speed of responding to the user access request based on the second value. Optionally, in some other examples, the first BRAS further includes a response unit. The adjustment unit is further configured to: after adjusting the response threshold of the first access interface from the first value to the second value, adjust the response threshold of the first access interface from the second value back to the first value when the user access failure rate corresponding to the first access interface is less than a second threshold, where the second threshold is less than the first threshold; and the response unit is configured to respond to the user access request through the first access interface based on the first value.

Optionally, in some other examples, the response threshold of the first access interface includes a first response delay. The adjustment unit is configured to adjust the first response delay of the first access interface from a first delay value to a second delay value, where the first delay value is less than the second delay value.

Optionally, in some other examples, the first response delay includes a delay corresponding to a MAC address.

Optionally, in some other examples, the response threshold includes a VRRP priority. The adjustment unit is configured to adjust a VRRP priority bound to the first access interface from a first priority to a second priority, where the first priority is higher than the second priority.

Optionally, in some other examples, the determining unit is configured to: determine a quantity of dialing failures and a total quantity of dialing attempts of a user who gets access through the first access interface; and determine the user access failure rate corresponding to the first access interface based on the quantity of dialing failures and the total quantity of dialing attempts of the user.

Optionally, in some other examples, the first BRAS further includes a sending unit. The sending unit is configured to send a processing message to a second BRAS after the response threshold of the first access interface is adjusted from the first value to the second value, where the processing message indicates the second BRAS to respond to the user access request based on a response value of a second access interface, and a corresponding response speed of responding to the user access request by the second BRAS based on the response value of the second access interface is faster than a corresponding response speed of responding to the user access request by the first BRAS based on the second value.

Optionally, in some other examples, the first BRAS further includes: a configuration unit, configured to configure the first threshold or the second threshold through a command line instruction.

According to a third aspect, an embodiment of this application provides a processing system for user access, where the processing system may include a first BRAS and a second BRAS; the first BRAS may be configured to: determine a user access failure rate corresponding to a first access interface on the first BRAS; and adjust a response threshold of the first access interface from a first value to a second value when the user access failure rate corresponding to the first access interface is greater than or equal to a first threshold, where a corresponding response speed of responding to a user access request based on the first value is faster than a corresponding response speed of responding to the user access request based on the second value; and the second BRAS is configured to: respond to the user access request based on a response value of a second access interface, where a corresponding response speed of responding to the user access request by the second BRAS based on the response value of the second access interface is faster than a corresponding response speed of responding to the user access request by the first BRAS based on the second value, and is slower than a corresponding response speed of responding to the user access request by the first BRAS based on the first value.

Optionally, in some examples, the response threshold of the first access interface includes a first response delay. The first BRAS is further configured to adjust the first response delay of the first access interface from a first delay value to a second delay value, where the first delay value is less than the second delay value.

Optionally, in some examples, the response threshold includes a virtual router redundancy protocol VRRP priority.

The first BRAS is further configured to adjust the VRRP priority bound to the first access interface from a first priority to a second priority, where the first priority is higher than the second priority.

Optionally, in some examples, the first BRAS is configured to: determine a quantity of dialing failures and a total quantity of dialing attempts of a user who gets access through the first access interface; and determine the user access failure rate corresponding to the first access interface based on the quantity of dialing failures and the total quantity of dialing attempts of the user.

Optionally, in some examples, the first BRAS is further configured to send a processing message to the second BRAS after adjusting the response threshold of the first access interface from the first value to the second value; and the second BRAS is configured to: receive the processing message; and respond to the user access request based on the response value of the second access interface, where the corresponding response speed of responding to the user access request by the second BRAS based on the response value of the second access interface is faster than the corresponding response speed of responding to the user access request by the first BRAS based on the second value.

According to a fourth aspect, an embodiment of this application provides a first BRAS. The first BRAS may include: a memory, configured to store computer-readable instructions; and a processor coupled to the memory, configured to execute the computer-readable instruction in the memory, to enable the first BRAS to perform the method described in any one of the first aspect or the possible implementations of the first aspect.

According to a fifth aspect, an embodiment of this application provides a computer-readable storage medium including instructions. When the instructions are run on a computer, the computer is enabled to perform the method according to any one of the first aspect or the possible implementations of the first aspect.

According to a sixth aspect, an embodiment of this application provides a computer program product including instructions. When the computer program product is run on a computer, the computer is enabled to perform the method according to any one of the first aspect or the possible implementations of the first aspect.

According to a seventh aspect, this application provides a chip system. The chip system may include a processor, configured to support a first BRAS in implementing the functions in the method described in any one of the first aspect or the possible implementations of the first aspect.

Optionally, with reference to the seventh aspect, in a first possible implementation, the chip system may further include a memory. The memory is configured to store program instructions and data that are necessary for the first BRAS. The chip system may include a chip, or may include a chip and another discrete device. The chip system may include an application-specific integrated circuit (application-specific integrated circuit, ASIC), a programmable gate array (field programmable gate array, FPGA), another programmable logic device, or the like. Further, the chip system may further include an interface circuit and the like.

Technical effects obtained in the second aspect to the seventh aspect are similar to technical effects obtained by the corresponding technical means in the first aspect. Details are not described herein again.

According to the foregoing technical solutions, it can be learned that embodiments of this application have the following advantages.

In embodiments of this application, the first BRAS determines the user access failure rate corresponding to the first access interface, and dynamically adjusts the response threshold of the first access interface from the first value to the second value when the user access failure rate corresponding to the first access interface is greater than or equal to the first threshold, so that the corresponding response speed of responding to the user access request based on the adjusted second value is slower than the corresponding response speed of responding to the user access request based on the first value. In this way, when receiving the user access request, the first BRAS does not preferentially respond to the user access request, but the second BRAS preferentially responds to the user access request through the second access interface. In this way, the user equipment may receive the response message fed back by the second BRAS, and then access the network from the second BRAS with a low user access failure rate, thereby improving the user access success rate and greatly improving user experience.

## BRIEF DESCRIPTION OF DRAWINGS

To describe the technical solutions in embodiments of this application more clearly, the following briefly describes the accompanying drawings for describing embodiments. It is clear that the accompanying drawings in the following description show merely some embodiments of this application.

FIG. 1 is a schematic diagram of a networking architecture according to an embodiment of this application;

FIG. 2 is a schematic flowchart of a processing method for user access according to an embodiment of this application;

FIG. 3 is a schematic flowchart of another processing method for user access according to an embodiment of this application;

FIG. 4 is a schematic flowchart of another processing method for user access according to an embodiment of this application;

FIG. 5 is a schematic diagram of a structure of a first BRAS according to an embodiment of this application;

FIG. 6 is a schematic diagram of a structure of another first BRAS according to an embodiment of this application;

FIG. 7 is a schematic diagram of a structure of a user access processing system according to an embodiment of this application; and

FIG. 8 is a schematic diagram of a hardware structure of a communication apparatus according to an embodiment of this application.

## DESCRIPTION OF EMBODIMENTS

Embodiments of this application provide a processing method for user access and a related apparatus. An active device configured to respond to a user access request is dynamically adjusted based on a user access failure rate corresponding to an access interface, so that the user access request can be responded to in time even when a third-party authentication server is faulty, thereby improving a user access success rate.

The following clearly and completely describes the technical solutions in embodiments of this application with reference to the accompanying drawings in embodiments of this application. It is clear that the described embodiments are some but not all of embodiments of this application.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances, so that embodiments of this application described herein can be implemented in another order than the order illustrated or described herein. Moreover, the terms "include", "have" and any other variant thereof are intended to cover non-exclusive inclusion. In this application, "at least one" means one or more, and "a plurality of" means two or more. The term "and/or" describes an association relationship for describing associated objects and represents that three relationships may exist. For example, A and/or B may represent the following cases. Only A exists, both A and B exist, and only B exists, where A and B may be singular or plural. The character "/" usually indicates an "or" relationship between associated objects. At least one of the following items (pieces) or a similar expression thereof indicates any combination of these items, including a single item (piece) or any combination of a plurality of items (pieces). For example, at least one of a, b, or c may represent: a, b, c, a and b, a and c, b and c, or a, b, and c, where a, b, and c may be singular or plural. It should be noted that "at least one item (piece)" may also be explained as "one item (piece) or more items (pieces)".

A BRAS is an access gateway oriented to a broadband network application. The BRAS is located at an edge of a network and serves as a bridge between the network and user equipment. The BRAS mainly complete access control of the user equipment, and the like. Therefore, the BRAS plays an important role in a process in which the user equipment accesses the network. However, although the existing BRAS supports user access in a cold backup solution and user access in a hot backup solution, responding to a user access request depends on a delay and a VRRP priority that are configured on an access interface of the BRAS, so as to control a BRAS from which the user accesses the network, thereby avoiding a case in which the user fails to get access due to a BRAS fault or a link fault. However, in a scenario in which no fault occurs on a physical link but a series of non-link faults such as a fault on a third-party authentication server occur, if the BRAS serving as an active device still responds to the user access request based on the current delay and VRRP priority that are configured on the access interface, the user may fail to get access on the selected active device. Consequently, responding to the user access request based on the current cold backup solution and hot backup solution cannot avoid a case in which the user fails to get access due to a non-link fault, and user access experience is poor.

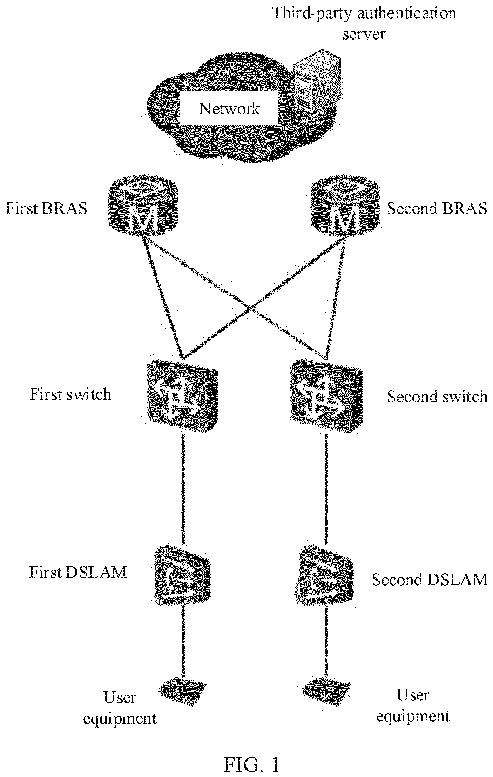

Therefore, to resolve the problem caused in the foregoing related technology, respond to the user access request in time, and improve the user access experience, FIG. 1 is a schematic diagram of a networking architecture according to an embodiment of this application. It can be learned from FIG. 1 that the networking architecture includes at least two BRASs (in FIG. 1, only a first BRAS and a second BRAS are used as an example), user equipment, at least one data subscriber line access multiplexer (digital subscriber line Access multiplexer, DSLAM) (in FIG. 1, only a first DSLAM and a second DSLAM are used as an example), at least one switch (in FIG. 1, only a first switch and a second switch are used as an example), a third-party authentication server, and the like.

A user may generate a user access request through the user equipment, and access the first DSLAM and the second DSLAM, so that the user access request can be transparently transmitted to the first BRAS and the second BRAS through the first switch, or be transparently transmitted to the first BRAS and the second BRAS through the second switch. In this way, the first BRAS, the second BRAS, and the third-party authentication server may undertake functions such as authentication, authorization, accounting, and forwarding control management of the user, so that the user equipment accesses the network.

It should be noted that the described first BRAS and second BRAS are two devices that back up each other. The described third-party authentication server may include but is not limited to a remote authentication dial in user service (remote authentication dial in user service, RADIUS) server and the like, which is not limited herein. In addition, the user equipment described above includes but is not limited to a mobile terminal, a tablet computer, a personal digital assistant (personal digital assistant, PDA), a vehicle-mounted computer, a personal computer (personal computer, PC), an intelligent device, and the like.

Based on the networking architecture provided in FIG. 1, the first BRAS pre-configures a response threshold of a first access interface as an initial response value, for example, a value 1. The second BRAS pre-configures a response threshold of a second access interface as another initial response value, for example, a value 2. If the described first BRAS is used as an active device, the value 1 may be configured to be less than the value 2. In this way, when the user equipment sends the user access request to the first BRAS and the second BRAS in a broadcast manner, the first BRAS responds to the user access request preferentially based on the value 1 through the first access interface. However, when a series of non-link faults such as a fault on the third-party authentication server occur, if the first BRAS always responds to the user access request based on the value 1, the user always chooses to access the network through the first BRAS, and at this time, the user continuously fails to access the network. Based on this, an embodiment of this application provides a processing method for user access. The method is intended to take statistics of a user access failure rate corresponding to an access interface, compare the user access failure rate with a first threshold, implement device switching between an active BRAS and a backup BRAS based on a comparison result, and use the switched active BRAS to respond to the user access request, so that the user access request can be responded to in time even when a third-party authentication server is faulty, thereby improving a user access success rate.

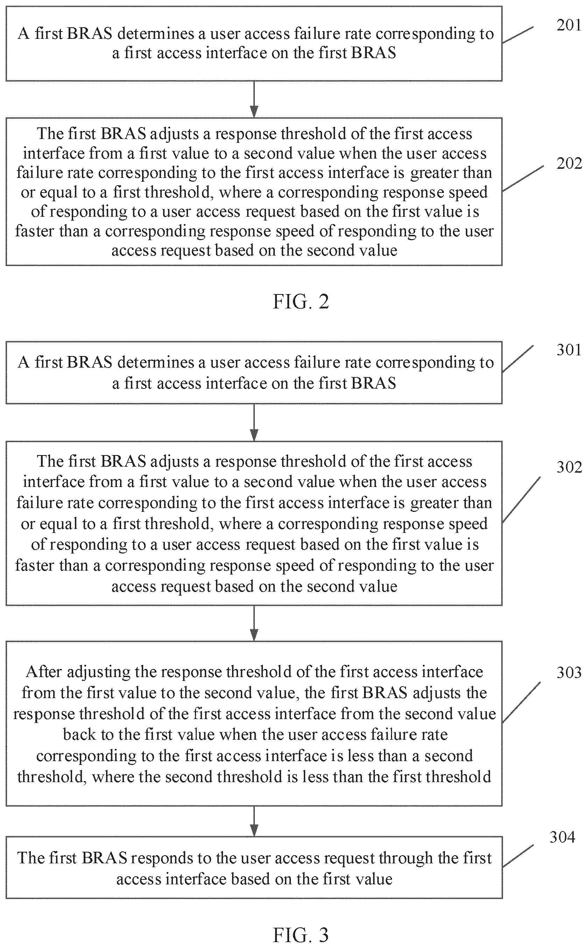

For ease of understanding, FIG. 2 is a schematic flowchart of a processing method for user access according to an embodiment of this application. As shown in FIG. 2, the method includes the following steps.

201. A first BRAS determines a user access failure rate corresponding to a first access interface on the first BRAS.

It should be understood that, a larger user access failure rate indicates a lower probability of successful access when user equipment accesses a network through an access interface corresponding to a current BRAS. In this case, the user equipment needs to access the network through another BRAS, and the another BRAS responds to a user access request of the user equipment. In addition, the user access failure rate corresponding to the first access interface may reflect, to some extent, an access failure situation when the user equipment accesses the network through the first access interface of the first BRAS. Therefore, the first BRAS may determine the user access failure rate corresponding to the first access interface of the first BRAS, and then determine whether to switch from an active device to a backup device based on the user access failure rate corresponding to the first access interface, so that the user access request is responded by another BRAS.

It should be noted that, the second BRAS shown in FIG. 1 may also determine a user access failure rate corresponding to an access interface on the second BRAS. In this embodiment of this application, only an example in which the first BRAS is a current active device is used for description. In actual applications, the second BRAS may also be used as the current active device. This is not limited herein.

Optionally, in some examples, the first BRAS determines the user access failure rate corresponding to the first access interface on the first BRAS, which may be determined in the following manner. That is, the first BRAS determines a quantity of dialing failures and a total quantity of dialing attempts of a user who gets access through the first access interface; and the first BRAS determines the user access failure rate corresponding to the first access interface based on the quantity of dialing failures and the total quantity of dialing attempts of the user.

It should be understood that the described quantity of dialing failures of the user is a quantity of times that the user equipment fails to access the network through the first access interface. Each time the access fails, the first BRAS generates a corresponding user access failure record. Therefore, the first BRAS may determine the quantity of dialing failures of the user from the user access failure record. Likewise, the first BRAS may also determine the total quantity of dialing attempts by taking statistics of the user access failure record and a user access success record. In this way, the user access failure rate corresponding to the first access interface may be obtained based on the quantity of dialing failures and the total quantity of dialing attempts of the user, that is

$$K = \frac{A}{B}$$

, where K is the user access failure rate corresponding to the first access interface, A is the quantity of dialing failures of the user, and B is the total quantity of dialing attempts of the user.

It should be noted that the user access failure may be caused by various faults, such as authentication failure of a third-party authentication server such as a RADIUS server, over-specification, no available address allocation, point to point protocol over Ethernet (point to point protocol over Ethernet, PPPoE) negotiation failure, and failure to add a forwarding entry. Therefore, within a preset time (for example, 10 minutes), the quantity of dialing failures of the user may be determined by periodically taking statistics of a corresponding user access failure record when the user fails to get access due to various faults such as authentication failure of the third-party authentication server such as the RADIUS server, over-specification, no available address allocation, PPPoE negotiation failure, and failure to add the forwarding entry, which is not specifically described herein.

202. The first BRAS adjusts a response threshold of the first access interface from a first value to a second value when the user access failure rate corresponding to the first access interface is greater than or equal to a first threshold, where a corresponding response speed of responding to a user access request based on the first value is faster than a corresponding response speed of responding to the user access request based on the second value.

In this example, the described response threshold of the first access interface may be understood as a parameter, which may reflect a response situation of the first BRAS in responding to the user access request, that is, whether the first BRAS can preferentially respond to the user access request based on a parameter value corresponding to the response threshold. In addition, the user equipment sends the user access request to the first BRAS and the second BRAS in a broadcast manner. If only the first value is less than a value corresponding to the response threshold of the second access interface of the second BRAS before the first BRAS does not adjust the response threshold of the first access interface from the first value to the second value, the first BRAS becomes an active device, and is configured to respond to the user access request. In addition, the user access failure rate corresponding to the first access interface is greater than or equal to the first threshold, which indicates that the first BRAS responds to the user access request based on the parameter value corresponding to the current response threshold of the first access interface, and the user equipment is always in an access failure state.

Therefore, after determining the user access failure rate corresponding to the corresponding first access interface, the first BRAS compares the user access failure rate corresponding to the first access interface with the first threshold. If the user access failure rate corresponding to the first access interface is greater than or equal to the first threshold, the first BRAS needs to adjust the response threshold of the first access interface from the first value to the second value, so that the corresponding response speed of responding to the user access request by the first BRAS based on the first value is faster than the corresponding response speed of responding to the user access request based on the second value. Further, a corresponding response speed of responding to the user access request by the second BRAS based on the response value corresponding to the response threshold of the first access interface is faster than a corresponding response speed of responding to the user access request by the first BRAS based on the second value, so as to implement that the first BRAS switches from the active device to the backup device, and the second BRAS switches from the backup device to the active device.

In this way, when the user equipment continues to send the user access request to the first BRAS and the second BRAS in the broadcast manner, when receiving the user access request, the first BRAS does not preferentially respond to the user access request, but the second BRAS responds to the user access request based on the value corresponding to the response threshold of the second access interface. In this way, the user equipment may preferentially receive the response message fed back by the second BRAS, and then preferentially access the network from the second BRAS through the second access interface, thereby improving a user access success rate and greatly improving user experience.

It should be noted that, if the user access failure rate corresponding to the first access interface is less than the first threshold, the first BRAS does not need to adjust the response threshold of the first access interface from the first value to the second value. In this case, the response threshold of the first access interface is still less than the value corresponding to the response threshold of the second access interface from the first value. Therefore, the first BRAS may still continue to respond to the user access request through the first access interface based on the first value.

It should be noted that the foregoing described response threshold may include but is not limited to a response delay or a VRRP priority. For ease of understanding, subsequently, the response threshold of the first access interface is referred to as a first response delay or a VRRP priority bound to the first access interface, and the response threshold of the second access interface is referred to as a second response delay or a VRRP priority bound to the second access interface. With respect to the response delay and the VRRP priority, the following separately describes a specific process in which the first BRAS adjusts the response threshold of the first access interface from the first value to the second value and responding to the user access request.

Optionally, in some other embodiments, when the response threshold includes a response delay, the specific process in which the first BRAS adjusts the response threshold of the first access interface from the first value to the second value and responding to the user access request may be understood with reference to the following manner.

That is, the response threshold of the first access interface includes a first response delay. The first BRAS adjusts the response threshold of the first access interface from the first value to the second value, including: the first BRAS adjusts the first response delay of the first access interface from a first delay value to a second delay value, where the first delay value is less than the second delay value.

It should be noted that, in a solution in which the response threshold is the response delay, the first BRAS pre-configures the first response delay of the first access interface as an initial delay value, that is, the first delay value, which is used to respond to the user access request when the first BRAS is the active device. However, if the first BRAS determines that the user access failure rate of the first access interface is greater than or equal to the first threshold, the first BRAS continues to respond to the user access request based on the current first delay value, and the user equipment is always in the access failure state. Based on this, the first BRAS should delay responding to the user access request, that is, adjust the first delay value to the second delay value, so that the adjusted second delay value is greater than the first delay value, and the adjusted second delay value is greater than a value of the second response delay of the second access interface of the second BRAS. In this way, when the first BRAS and the second BRAS receive the user access request, the first BRAS does not preferentially respond to the user access request, but the second BRAS preferentially responds to the user access request based on the value of the second response delay of the second access interface. In addition, after adjusting the first delay value to the second delay value, the first BRAS responds to the user access request only when the second delay value is reached.

For example, it is assumed that the first delay value is 10s, the value of the second response delay of the second access interface is 20s, and the second delay value is 40s. If the user access failure rate of the first access interface is greater than or equal to the first threshold, after adjusting the first response delay from 10s to 40s, the first BRAS does not continue to respond to the user access request based on 10s, but the second BRAS responds to the user access request based on 20s preferentially. In addition, the first BRAS will subsequently respond to the user access request based on 40s.

It should be noted that, in actual applications, the first delay value, the value of the second response delay of the second access interface, the second delay value, and the like may be other values in addition to the described specific values. This is not specifically limited herein.

Optionally, in some other embodiments, the first response delay and the second response delay described above include a delay corresponding to the MAC address. It should be noted that the MAC may include but is not limited to an odd MAC address or an even MAC address, and the delay corresponding to the MAC address may include but is not limited to a delay corresponding to the odd MAC address or a delay corresponding to the even MAC address. The described delay corresponding to the odd MAC address may be understood as a delay value used to respond to a user access request sent by the user equipment with the odd MAC address when the MAC address of the user equipment is the odd MAC address. Similarly, the described delay corresponding to the even MAC address may be understood as a delay value used to respond to a user access request sent by the user equipment with the even MAC address when the MAC address of the user equipment is the even MAC address.

Optionally, in some other examples, when the response threshold includes the VRRP priority, the specific process in which the first BRAS adjusts the response threshold of the first access interface from the first value to the second value and responds to the user access request may also be understood with reference to the following manner.

That is, the first BRAS adjusts a response threshold of the first access interface from a first value to a second value, including: the first BRAS adjusts a virtual router redundancy protocol VRRP priority bound to the first access interface from a first priority to a second priority, where the first priority is higher than the second priority.

It should be noted that the VRRP priority may be understood as a response sequence when the access interface of the BRAS is used to respond to the user access request. A higher VRRP priority indicates that the BRAS is more likely to respond to the user access request preferentially through the corresponding access interface.

Therefore, in the solution in which the response threshold is the VRRP priority, the first BRAS pre-configures the VRRP priority bound to the first access interface as an initial value, that is, the first priority, which is used to respond to the user access request when the first BRAS is the active device. Similarly, the second BRAS pre-configures the VRRP priority bound to the second access interface as another initial value, that is, a third priority, which is used to respond to the user access request when the second BRAS is the active device.

However, if the first BRAS serving as the active device determines that the user access failure rate of the first access interface is greater than or equal to the first threshold, the first BRAS continues to preferentially respond to the user access request based on the current first priority, and the user equipment is always in the access failure state. Based on this, the first BRAS should delay responding to the user access request, that is, adjust the first priority to the second priority, so that the adjusted second priority is less than the first priority, and the adjusted second priority is less than the third priority. In this way, it can be implemented that the first BRAS is switched from the active device to the backup device, and the second BRAS is switched from the backup device to the active device.

Therefore, after the first BRAS adjusts the first priority to the second priority, the first BRAS does not preferentially respond to the user access request when the first BRAS and the second BRAS receive the user access request, but the second BRAS preferentially responds to the user access request. In this way, the user equipment may preferentially receive the response message fed back by the second BRAS, and then preferentially access the network from the second BRAS through the second access interface.

For example, it is assumed that the first priority is a level 5, the third priority is a level 3, and the level 5 is greater than the level 3. If the user access failure rate of the first access interface is greater than or equal to the first threshold, the first BRAS may adjust the VRRP priority bound to the first access interface from the level 5 to the level 2 or the level 1. In this way, the user access request may be preferentially responded by the second BRAS with a higher VEEP priority.

It should be noted that, in actual applications, in addition to the level 5, the level 3, the level 1, or the level 2 described above, the first priority, the second priority, the third priority, or the like may be another level. This is not specifically limited herein.

Optionally, in some other examples, after the first BRAS adjusts the response threshold of the first access interface from the first value to the second value, the processing method further includes: the first BRAS sends a processing message to a second BRAS, where the processing message indicates the second BRAS to respond to the user access request based on a response value of a second access interface, and a corresponding response speed of responding to the user access request by the second BRAS based on the response value of the second access interface is faster than a corresponding response speed of responding to the user access request by the first BRAS based on the second value.

In the example, after the first value is adjusted to the second value, a corresponding response speed of responding to the user access request by the first BRAS based on the second value is slower than a corresponding response speed of responding to the user access request by the second BRAS based on the response value of the second access interface. Therefore, the first BRAS may further notify, in a manner such as processing a message, that the second BRAS serving as the backup device should preferentially respond to the user access request, so as to avoid continuous access failure of the user equipment, thereby greatly improving the access success rate of the user equipment.

Compared with the solution in which the first BRAS serving as the current active device always responds to the user access request through the first value configured by the response threshold of the first access interface, in this embodiment of this application, the first BRAS determines the user access failure rate corresponding to the first access interface, and dynamically adjusts the response threshold of the first access interface from the first value to the second value when the user access failure rate corresponding to the first access interface is greater than or equal to the first threshold, so that the corresponding response speed of responding to the user access request based on the adjusted second value is slower than the corresponding response speed of responding to the user access request based on the first value. In this way, when receiving the user access request, the first BRAS does not preferentially respond to the user access request, but the second BRAS preferentially responds to the user access request through the response value of the second access interface. In this way, the user equipment may receive the response message fed back by the second BRAS, and then access the network from the second BRAS with a low user access failure rate, thereby improving the user access success rate and greatly improving user experience.

To further understand a processing method for user access provided in an embodiment of this application, refer to FIG. 3. FIG. 3 is a schematic flowchart of another processing method for user access according to an embodiment of this application. It can be learned from FIG. 3 that the method includes the following steps.

301. The first BRAS determines a user access failure rate corresponding to the first access interface on the first BRAS.

302. The first BRAS adjusts a response threshold of the first access interface from a first value to a second value when the user access failure rate corresponding to the first access interface is greater than or equal to a first threshold, where a corresponding response speed of responding to a user access request based on the first value is faster than a corresponding response speed of responding to the user access request based on the second value.

It should be understood that, for specific understanding of the foregoing steps 301 to 302, reference may be made to content described in steps 201 to 202 in FIG. 2. Details are not described herein again.

303. After adjusting the response threshold of the first access interface from the first value to the second value, the first BRAS adjusts the response threshold of the first access interface from the second value back to the first value when the user access failure rate corresponding to the first access interface is less than a second threshold, where the second threshold is less than the first threshold.

In this example, if the first BRAS has switched from an active device to a backup device after executing steps 301 to 302, the first BRAS does not continue to respond after continuing to receive the user access request sent by the user equipment, so that a quality of dialing failures of the user when the user equipment accesses the network through the first BRAS is reduced. In this case, the first BRAS may also switch back to the active device to some extent, and continue to respond to the user access request.

Based on this, the first BRAS further needs to compare the user access failure rate of the first access interface with the second threshold. When the user access failure rate of the first access interface is less than the second threshold, the first BRAS switch from the backup device to the active device, and continue to respond to the user access request. Specifically, the first BRAS adjusts the response threshold of the first access interface from the second value back to the first value when the user access failure rate of the first access interface is less than the second threshold, so as to respond to the user access request based on the first value when receiving the user access request. It should be noted that the first threshold is greater than the second threshold.

Optionally, in some other examples, when the response threshold includes a response delay, a specific process in which the first BRAS adjusts the response threshold of the first access interface from the second value back to the first value may be understood with reference to the following manner.

That is, the response threshold of the first access interface includes the first response delay. The first BRAS adjusts the response threshold of the first access interface from the second value back to the first value, including: the first BRAS adjusts the first response delay of the first access interface from the second delay value to the first delay value.

It should be noted that the first delay value is less than a value corresponding to the second response delay of the second access interface.

For example, it is assumed that the first delay value is 10s, the value of the second response delay of the second access interface is 20s, and the second delay value is 40s. If the user access failure rate of the first access interface is less than the second threshold, the first BRAS needs to adjust the first response delay from 40s back to 10s, and continue to respond to the user access request based on 10s preferentially.

Optionally, in some other examples, when the response threshold includes the VRRP priority, a specific process in which the first BRAS adjusts the response threshold of the first access interface from the second value back to the first value may also be understood with reference to the following manner.

That is, the first BRAS adjusts the response threshold of the first access interface from the second value back to the first value, including: the first BRAS adjusts a virtual router redundancy protocol VRRP priority bound to the first access interface from the second priority to the first priority, where the first priority is higher than the second priority.

It should be noted that, when the VRRP priority bound to the second access interface is a third priority, the first priority is greater than the third priority. In addition, the described VRRP priority may also be understood with reference to step 202. Details are not described herein again.

For example, it is assumed that the first priority is a level 5, the third priority is a level 3, and the level 5 is greater than the level 3. If the user access failure rate of the first access interface is less than the second threshold, the first BRAS may adjust the VRRP priority bound to the first access interface from the level 2 or the level 1 back to the level 5. In this way, the user access request may continue to be preferentially responded by the first BRAS with a higher VEEP priority.

304. The first BRAS responds to the user access request through the first access interface based on the first value.

In the example, when the user access failure rate corresponding to the first access interface is less than the second threshold, after the first BRAS adjusts the response threshold of the first access interface from the second value back to the first value, the first BRAS may further respond to the user access request through the first access interface based on the first value.

Optionally, in some other embodiments, the foregoing described processing method for user access may further include: The first BRAS configures the first threshold or the second threshold through a command line instruction. That is, in addition to setting the first threshold or the second threshold to a default value in a code manner, the first BRAS may further configure the first threshold or the second threshold as required through the command line instruction, which is not specifically limited herein.

In this embodiment of this application, the first BRAS adjusts the response threshold of the first access interface from the first value to the second value when the user access failure rate corresponding to the first access interface is greater than or equal to the first threshold, so that after receiving the user access request, the first BRAS does not preferentially respond to the user access request, the first BRAS may further determine whether the user access failure rate corresponding to the first access interface is less than the second threshold. The first BRAS adjusts the response threshold of the first access interface from the second value back to the first value when the user access failure rate corresponding to the first access interface is less than the second threshold, so that the user access request is preferentially responded based on the first value. This not only improves the user access success rate, greatly improves user experience, but also enriches application scenarios.

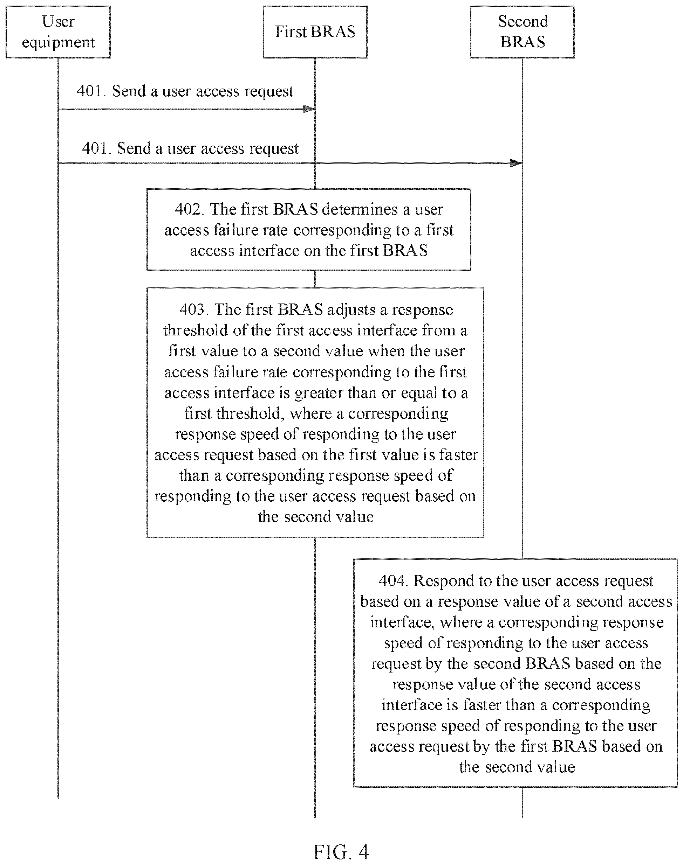

FIG. 2 to FIG. 3 mainly describe the processing method for user access provided in embodiments of this application from a perspective of the first BRAS. The following describes a processing method for user access provided in embodiments of this application from an interaction perspective. For details, refer to FIG. 4, which is a schematic diagram of another processing method for user access according to an embodiment of this application. It can be learned from FIG. 4 that the method includes the following steps.

401. The user equipment sends a user access request to the first BRAS and the second BRAS.

In the example, when the user equipment needs to access the network, after generating a corresponding user access request, the user equipment may send the user access request to the first BRAS and the second BRAS.

402. The first BRAS determines a user access failure rate corresponding to a first access interface on the first BRAS.

403. The first BRAS adjusts a response threshold of the first access interface from a first value to a second value when the user access failure rate corresponding to the first access interface is greater than or equal to a first threshold, where a corresponding response speed of responding to the user access request based on the first value is faster than a corresponding response speed of responding to the user access request based on the second value.

In this example, it should be understood that, for details of steps 401 to 402, refer to content described in steps 201 to 202 in FIG. 2. Details are not described herein again.

404. The second BRAS responds to the user access request based on a response value of a second access interface, where a corresponding response speed of responding to the user access request by the second BRAS based on the response value of the second access interface is faster than a corresponding response speed of responding to the user access request by the first BRAS based on the second value.

In this example, because the user access failure rate corresponding to the first access interface in the first BRAS serving as the active device is greater than or equal to the first threshold, the first BRAS should be switched from the active device to the backup device, and the second BRAS should be switched from the backup device to the active device, so as to respond to the user access request. In addition, after the first BRAS adjusts the first value to the second value, a corresponding response speed of responding to the user access request by the first BRAS based on the second value is slower than a corresponding response speed of responding to the user access request by the second BRAS based on the response value of the second access interface. In this case, the second BRAS that switches to the active device may respond to the user access request based on the response value of the second access interface, so as to avoid access failure when the user equipment continuously accesses the network through the first access interface in the first BRAS, thereby greatly improving the access success rate of the user equipment.

It should be noted that, in some other embodiments, after adjusting the first value to the second value, the first BRAS may instruct the second BRAS serving as the backup device to preferentially respond to the user access request in a manner such as processing a message. For details, refer to the content described in FIG. 2 for understanding.

The foregoing mainly describes the solutions provided in embodiments of this application from the perspective of the methods. It may be understood that, to implement the foregoing functions, the first BRAS includes corresponding hardware structures and/or software modules for performing the functions. A person skilled in the art should be easily aware that, in combination with the functions described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

From a perspective of a functional unit, in this application, the first BRAS may be divided into functional units based on the foregoing method embodiments. For example, each functional unit may be obtained through division based on each corresponding function, or two or more functions may be integrated into one functional unit. The integrated functional unit may be implemented in a form of hardware, or may be implemented in a form of a software functional unit.

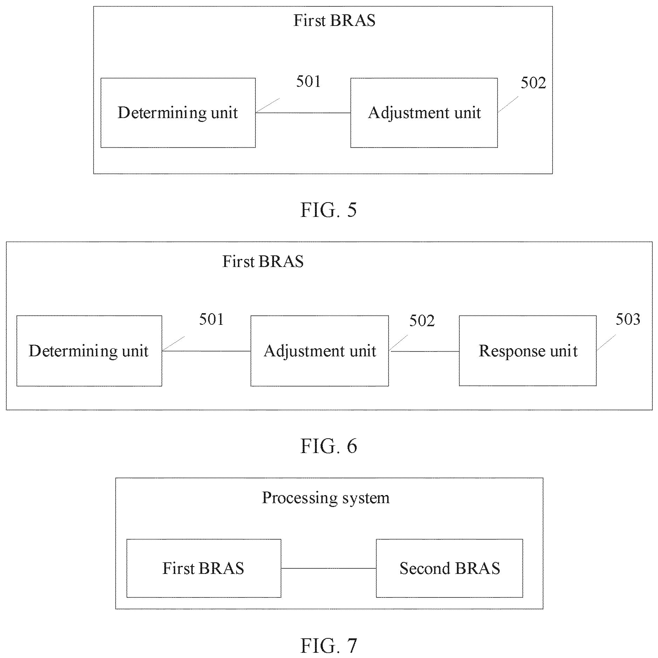

For example, when function units are divided in an integrated manner, refer to FIG. 5, which is a schematic diagram of a structure of a first BRAS according to an embodiment of this application. The described first BRAS may include a determining unit 501 and an adjustment unit 502.

The determining unit 501 is configured to determine a user access failure rate corresponding to a first access interface on the first BRAS.

The adjustment unit 502 is configured to adjust a response threshold of the first access interface from a first value to a second value when the user access failure rate corresponding to the first access interface is greater than or equal to a first threshold, where a corresponding response speed of responding to a user access request based on the first value is faster than a corresponding response speed of responding to the user access request based on the second value.

Optionally, based on the structure of the first BRAS described in FIG. 5, FIG. 6 is a schematic diagram of a structure of another first BRAS according to an embodiment of this application. It can be seen from FIG. 6 that the first BRAS may include the determining unit 501, the adjustment unit 502, and a response unit 503, where functions executed by the determining unit 501 and the adjustment unit 502 may be understood with reference to the content described in FIG. 5. In addition, the adjustment unit 502 is further specifically configured to: after adjusting the response threshold of the first access interface from the first value to the second value, adjust the response threshold of the first access interface from the second value back to the first value when the user access failure rate corresponding to the first access interface is less than a second threshold, where the second threshold is less than the first threshold.

The response unit 503 is further configured to respond to the user access request through the first access interface based on the first value.

Optionally, in some other examples, the response threshold of the first access interface includes a first response delay. The adjustment unit 502 is specifically configured to adjust the first response delay of the first access interface from a first delay value to a second delay value, where the first delay value is less than the second delay value.

Optionally, in some other examples, the first response delay includes a delay corresponding to a MAC address.

Optionally, in some other examples, the response threshold includes a virtual router redundancy protocol VRRP priority. The adjustment unit 502 is specifically configured to adjust a VRRP priority bound to the first access interface from a first priority to a second priority, where the first priority is higher than the second priority.

Optionally, in some other examples, the determining unit 501 is specifically configured to: determine a quantity of dialing failures and a total quantity of dialing attempts of a user who gets access through the first access interface; and determine the user access failure rate corresponding to the first access interface based on the quantity of dialing failures and the total quantity of dialing attempts of the user.

Optionally, the first BRAS further includes a sending unit. The sending unit is configured to send a processing message to a second BRAS after the response threshold of the first access interface is adjusted from the first value to the second value, where the processing message indicates the second BRAS to respond to the user access request based on a response value of a second access interface, and a corresponding response speed of responding to the user access request by the second BRAS based on the response value of the second access interface is faster than a corresponding response speed of responding to the user access request by the first BRAS based on the second value.

Optionally, in some other examples, the first BRAS may further include: a configuration unit, configured to configure the first threshold or the second threshold through a command line instruction.

In this embodiment of this application, the determining module 501 determines the user access failure rate corresponding to the first access interface, and the adjustment module 502 adjusts the response threshold of the first access interface from the first value to the second value when the user access failure rate corresponding to the first access interface is greater than or equal to the first threshold, so that the corresponding response speed of responding to the user access request based on the first value is faster than the corresponding response speed of responding to the user access request based on the second value. In this way, when receiving the user access request, the user access request is not responded preferentially, and the second BRAS responds preferentially to the user access request through the second access interface. In this way, the user equipment may receive the response message fed back by the second BRAS, and then access the network from the second BRAS with a low user access failure rate, thereby improving the user access success rate and greatly improving user experience.

It should be noted that the first BRAS provided in this embodiment of this application is configured to perform the method performed by the first BRAS network element in the processing method embodiment corresponding to FIG. 2 or FIG. 3. Therefore, for understanding of this embodiment of this application, refer to a related part in the processing method embodiment corresponding to FIG. 2 or FIG. 3.

The foregoing mainly describes the first BRAS from the perspective of the functional unit. In this application, the first BRAS and the second BRAS may also be described from a perspective of system interaction. For example, FIG. 7 is a schematic diagram of a structure of a processing system for user access. As shown in FIG. 7, an embodiment of the processing system in this application may include a first BRAS and a second BRAS.

The first BRAS is configured to: determine a user access failure rate corresponding to a first access interface on the first BRAS; and

adjust a response threshold of the first access interface from a first value to a second value when the user access failure rate corresponding to the first access interface is greater than or equal to a first threshold, where a corresponding response speed of responding to a user access request based on the first value is faster than a corresponding response speed of responding to the user access request based on the second value.

The second BRAS is configured to:
respond to the user access request based on a response value of a second access interface, where a corresponding response speed of responding to the user access request by the second BRAS based on the response value of the second access interface is faster than a corresponding response speed of responding to the user access request by the first BRAS based on the second value, and is slower than a corresponding response speed of responding to the user access request by the first BRAS based on the first value.

Compared with that the first BRAS serving as a current active device always responds to the user access request through an initial response value (that is, the first value) configured by the response threshold of the first access interface, in this embodiment of this application, the first BRAS determines the user access failure rate corresponding to the first access interface, and when the user access failure rate corresponding to the first access interface is greater than or equal to the first threshold, dynamically adjusts the response threshold of the first access interface from the first value to the second value. In this way, a corresponding response speed of responding to the user access request based on the adjusted second value is slower than a corresponding response speed of responding to the user access request based on the first value. In addition, a corresponding response speed of responding to the user access request by the second BRAS originally serving as a backup device based on a response value of the second access interface is faster than a corresponding response speed of responding to the user access request by the first BRAS based on the second value. In this way, when receiving the user access request, the first BRAS does not preferentially respond to the user access request, but the second BRAS preferentially responds to the user access request through the second access interface. In this way, the user equipment may receive the response message fed back by the second BRAS, and access the network from the second BRAS with a low user access failure rate. In other words, the active device that responds to the user access request is dynamically adjusted based on the user access failure rate corresponding to the access interface, so that the user access request can be responded to in time even when a series of non-link faults such as a fault on a third-party authentication server occur, thereby improving a user access success rate, and greatly improving user experience.

In some embodiments of this application, the response threshold of the first access interface includes a first response delay. The first BRAS is further configured to adjust the first response delay of the first access interface from a first delay value to a second delay value, where the first delay value is less than the second delay value.

In some other embodiments of this application, the response threshold includes a virtual router redundancy protocol VRRP priority. The first BRAS is further configured to adjust a VRRP priority bound to the first access interface from a first priority to a second priority, where the first priority is higher than the second priority.

In some other embodiments of this application, the first BRAS is configured to: determine a quantity of dialing failures and a total quantity of dialing attempts of a user who gets access through the first access interface;

and determine the user access failure rate corresponding to the first access interface based on the quantity of dialing failures and the total quantity of dialing attempts of the user.

In some other embodiments of this application, the first BRAS is further configured to send a processing message to the second BRAS after adjusting the response threshold of the first access interface from the first value to the second value; and the second BRAS is configured to: receive the processing message; and respond to the user access request based on the response value of the second access interface, where the corresponding response speed of responding to the user access request by the second BRAS based on the response value of the second access interface is faster than the corresponding response speed of responding to the user access request by the first BRAS based on the second value.

It should be noted that, content such as information exchange between the modules/units of the apparatus and the execution processes thereof is based on the same idea as the method embodiments of this application, and produces the same technical effects as the method embodiments of this application. For specific content, refer to the foregoing descriptions in the method embodiments of this application. Details are not described herein again.

The foregoing describes the first BRAS in embodiments of this application from a perspective of a modular functional entity, and describes a processing system for user access from a perspective of a system. From a perspective of an entity device, the first BRAS may be implemented by one entity device, or may be jointly implemented by a plurality of entity devices, or may be a logical functional unit in one entity device. This is not specifically limited in this embodiment of this application.

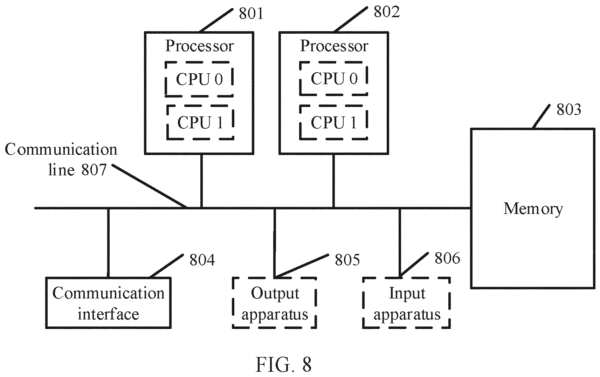

For example, the first BRAS may be implemented by a communication device in FIG. 8. FIG. 8 is a schematic diagram of a hardware structure of the communication device according to an embodiment of this application. The communication device includes at least one processor 801, a communication line 807, a memory 803, and at least one communication interface 804.

The processor 801 may be a general-purpose central processing unit (central processing unit, CPU), a microprocessor, an application-specific integrated circuit (application-specific integrated circuit, server IC), or one or more integrated circuits configured to control execution of programs in the solutions of this application. The processor 801 may be specifically configured to: determine a user access failure rate corresponding to a first access interface on the first BRAS; and adjust a response threshold of the first access interface from a first value to a second value when the user access failure rate corresponding to the first access interface is greater than or equal to a first threshold, where a corresponding response speed of responding to a user access request based on the first value is faster than a corresponding response speed of responding to the user access request based on the second value.

The communication line 807 may include a path for transmitting information between the foregoing components.

The communication interface 804 is any apparatus such as a transceiver, and is configured to communicate with another apparatus or a communication network, for example, the Ethernet.

The memory 803 may be but is not limited to a read-only memory (read-only memory, ROM) or another type of static storage apparatus that can store static information and instructions, a random access memory (random access memory, RAM) or another type of dynamic storage apparatus that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer. The memory may exist independently, and is connected to the processor through the communication line 807. Alternatively, the memory 803 and the processor 801 may be integrated together.

The memory 803 is configured to store computer-executable instructions for executing the solution of this application, and the processor 801 controls execution of the computer-executable instructions. The processor 801 is configured to execute the computer-executable instructions stored in the memory 803, to implement the processing method for user access provided in the foregoing embodiment of this application.

Optionally, the computer-executable instructions in this embodiment of this application may also be referred to as application program code. This is not specifically limited in this embodiment of this application.

In a specific implementation, as an embodiment, the processor 801 may include one or more CPUs, for example, a CPU 0 and a CPU 1 in FIG. 8.

In a specific implementation, as an embodiment, the communication apparatus may include a plurality of processors, for example, the processor 801 and a processor 802 in FIG. 8. Each of the processors may be a single-core (single-CPU) processor, or may be a multi-core (multi-CPU) processor. The processor herein may be one or more apparatuses, circuits, and/or processing cores configured to process data (such as computer program instructions).

In a specific implementation, as an embodiment, the communication apparatus may further include an output apparatus 805 and an input apparatus 806. The output apparatus 805 communicates with the processor 801, and may display information in a plurality of manners. The input apparatus 806 communicates with the processor 801, and may receive input from a user in a plurality of manners. For example, the input apparatus 806 may be a mouse, a touchscreen apparatus, or a sensing apparatus.

The communication apparatus may be a general-purpose apparatus or a dedicated apparatus. In a specific implementation, the communication apparatus may be a portable computer, a mobile terminal, or the like, or an apparatus having a structure similar to that in FIG. 8. A type of the communication apparatus is not limited in this embodiment of this application.

It should be noted that, the processor 801 in FIG. 8 may invoke the computer executable instructions stored in the memory 803, so that the first BRAS performs the method performed by the first BRAS in the processing method embodiment corresponding to FIG. 2, FIG. 3, or FIG. 4. The processor 801 in FIG. 8 may invoke the computer executable instructions stored in the memory 803, so that the second BRAS executes the method executed by the second BRAS in the processing method embodiment corresponding to FIG. 4.

Specifically, functions/implementation processes of the determining unit 501 and the adjustment unit 502 in FIG. 5 and FIG. 6, and the response unit 503 in FIG. 6 may be implemented by the processor 801 in FIG. 8 by invoking the computer-executable instructions stored in the memory 803, and functions/implementation processes of a sending unit may be implemented by the communication interface 804 in FIG. 8.

All or some of the foregoing embodiments may be implemented by software, hardware, firmware, or any combination thereof. When software is used to implement embodiments, all or some of embodiments may be implemented in a form of a computer program product.

It may be clearly understood by a person skilled in the art that, for the purpose of convenient and brief description, for a detailed working process of the foregoing photographing apparatus, display apparatus, units, and modules, refer to a corresponding process in the foregoing method embodiments. Details are not described herein again.

In the several embodiments provided in this application, it should be understood that the disclosed device and method may be implemented in other manners. For example, the described embodiments of the photographing apparatus and the display apparatus are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or a part contributing to a conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended to describe the technical solutions of this application, but not to limit this application. Although this application is described in detail with reference to the foregoing embodiments, a person of ordinary skilled in the art should understand that modifications may still be made to the technical solutions described in the foregoing embodiments or equivalent replacements may be made to some technical features.

**Claims**

1. A processing method for user access, wherein the processing method comprises:

    determining (201; 301; 402), by a first broadband remote access server, BRAS, a user access failure rate corresponding to a first access interface on the first BRAS; and
    adjusting (202; 302; 403), by the first BRAS, a response delay or priority of the first access interface from a first value to a second value when the user access failure rate corresponding to the first access interface is greater than or equal to a first threshold, wherein a corresponding response speed of responding to a user access request based on the first value is faster than a corresponding response speed of responding to the user access request based on the second value,
    responding (404), by a second BRAS, to a first user access request based on a response delay or priority of a second access interface, wherein a corresponding response speed of responding to the first user access request by the second BRAS based on the response delay or priority of the second access interface is faster than a corresponding response speed of responding to the first user access request by the first BRAS based on the second value, and is slower than a corresponding response speed of responding to the user access request by the first BRAS based on the first value; and
    wherein the first user access request is sent by a user equipment to the first and second BRAS in a broadcast manner.

2. The method according to claim 1, wherein after the adjusting, by the first BRAS, a response delay or priority of the first access interface from a first value to a second value, the processing method further comprises:

    adjusting (303), by the first BRAS, the response delay or priority of the first access interface from the second value back to the first value when the user access failure rate corresponding to the first access interface is less than a second threshold, wherein the second threshold is less than the first threshold; and
    responding (304) to, by the first BRAS, the user access request through the first access interface based on the first value.

3. The processing method according to claim 1 or 2, wherein the response delay of the first access interface comprises a first response delay, and the adjusting, by the first BRAS, a response delay of the first access interface from a first value to a second value comprises:
    adjusting, by the first BRAS, the first response delay of the first access interface from a first delay value to a second delay value, wherein the first delay value is less than the second delay value.

4. The processing method according to claim 3, wherein the first response delay comprises a delay corresponding to a media access control MAC address of a user equipment and the first response delay is a delay value used to respond to a user access request sent by the user equipment.

5. The processing method according to claim 1 or 2, wherein the response priority comprises a virtual router redundancy protocol VRRP priority, and the adjusting, by the first BRAS, a response priority of the first access interface from a first value to a second value comprises:
adjusting, by the first BRAS, a VRRP priority bound to the first access interface from a first priority to a second priority, wherein the first priority is higher than the second priority.

6. The processing method according to any one of claims 1 to 5, wherein the determining, by a first BRAS, a user access failure rate corresponding to a first access interface on the first BRAS comprises:

determining, by the first BRAS, a quantity of dialing failures and a total quantity of dialing attempts of a user equipment which gets access through the first access interface; and
determining, by the first BRAS, the user access failure rate corresponding to the first access interface based on the quantity of dialing failures and the total quantity of dialing attempts of the user equipment.

7. The processing method according to any one of claims 1 to 6, wherein after the adjusting, by the first BRAS, a response delay or priority of the first access interface from a first value to a second value, the processing method further comprises:
sending, by the first BRAS, a processing message to a second BRAS, wherein the processing message indicates the second BRAS to respond to the user access request based on a response delay or priority of a second access interface, and a corresponding response speed of responding to the user access request by the second BRAS based on the response delay or priority of the second access interface is faster than a corresponding response speed of responding to the user access request by the first BRAS based on the second value.

8. The processing method according to any one of claims 2 to 7, wherein the processing method further comprises:
configuring, by the first BRAS, the first threshold or the second threshold through a command line instruction.

9. A processing system for user access, wherein the processing system comprises a first BRAS and a second BRAS;
the first BRAS is configured to:

determine a user access failure rate corresponding to a first access interface on the first BRAS; and
adjust a response delay or priority of the first access interface from a first value to a second value when the user access failure rate corresponding to the first access interface is greater than or equal to a first threshold, wherein a corresponding response speed of responding to a user access request based on the first value is faster than a corresponding response speed of responding to the user access request based on the second value; and
the second BRAS is configured to:

respond to a first user access request based on a response delay or priority of a second access interface, wherein a corresponding response speed of responding to the first user access request by the second BRAS based on the response delay or priority of the second access interface is faster than a corresponding response speed of responding to the first user access request by the first BRAS based on the second value, and is slower than a corresponding response speed of responding to the first user access request by the first BRAS based on the first value; and
wherein the first user access request is sent by a user equipment to the first and second BRAS in a broadcast manner.

10. The processing system according to claim 9, wherein the response delay of the first access interface comprises a first response delay; and
the first BRAS is further configured to adjust the first response delay of the first access interface from a first delay value to a second delay value, wherein the first delay value is less than the second delay value.

11. The processing system according to claim 9, wherein the response priority comprises a virtual router redundancy protocol VRRP priority; and
the first BRAS is further configured to adjust a VRRP priority bound to the first access interface from a first priority to a second priority, wherein the first priority is higher than the second priority.

12. The processing system according to any one of claims 9 to 11, wherein the first BRAS is configured to:

determine a quantity of dialing failures and a total quantity of dialing attempts of a user who gets access through the first access interface; and
determine the user access failure rate corresponding to the first access interface based on the quantity of dialing failures and the total quantity of dialing attempts of the user.

**13.** The processing system according to any one of claims 9 to 12, wherein

the first BRAS is further configured to send a processing message to the second BRAS after adjusting the response delay or priority of the first access interface from the first value to the second value; and
the second BRAS is configured to:

receive the processing message; and
respond to the user access request based on the response delay or priority of the second access interface, wherein the corresponding response speed of responding to the user access request by the second BRAS based on the response delay or priority of the second access interface is faster than the corresponding response speed of responding to the user access request by the first BRAS based on the second value.

**14.** A computer program product, wherein when instructions are run on a computer, the computer is enabled to perform the processing method according to any one of claims 1 to 8.

**15.** A computer-readable storage medium, wherein when instructions are run on a computer, the computer is enabled to perform the processing method according to any one of claims 1 to 8.

**Patentansprüche**

**1.** Verarbeitungsverfahren für Benutzerzugriff, wobei das Verarbeitungsverfahren Folgendes umfasst:

Bestimmen (201; 301; 402) einer Benutzerzugriffsfehlerrate, die einer ersten Zugriffsschnittstelle auf einem ersten Breitband-Fernzugriffsserver (broadband remote access server - BRAS) entspricht, durch den ersten BRAS; und
Einstellen (202; 302; 403) einer Reaktionsverzögerung oder Priorität der ersten Zugriffsschnittstelle von einem ersten Wert auf einen zweiten Wert durch den ersten BRAS, wenn die Benutzerzugriffsfehlerrate, die der ersten Zugriffsschnittstelle entspricht, größer oder gleich einem ersten Schwellenwert ist, wobei eine entsprechende Reaktionsgeschwindigkeit der Reaktion auf eine Benutzerzugriffsanforderung, die auf dem ersten Wert basiert, schneller ist als eine entsprechende Reaktionsgeschwindigkeit der Reaktion auf die Benutzerzugriffsanforderung, die auf dem zweiten Wert basiert,
Reagieren (404) auf eine erste Benutzerzugriffsanforderung durch einen zweiten BRAS basierend auf einer Reaktionsverzögerung oder Priorität einer zweiten Zugriffsschnittstelle, wobei eine entsprechende Reaktionsgeschwindigkeit der Reaktion auf die erste Benutzerzugriffsanforderung durch den zweiten BRAS basierend auf der Reaktionsverzögerung oder Priorität der zweiten Zugriffsschnittstelle schneller ist als eine entsprechende Reaktionsgeschwindigkeit der Reaktion auf die erste Benutzerzugriffsanforderung durch den ersten BRAS basierend auf dem zweiten Wert, und langsamer ist als eine entsprechende Reaktionsgeschwindigkeit der Reaktion auf die Benutzerzugriffsanforderung durch den ersten BRAS basierend auf dem ersten Wert; und
wobei die erste Benutzerzugriffsanforderung durch ein Benutzergerät an den ersten und zweiten BRAS auf eine Broadcast-Weise gesendet wird.

**2.** Verfahren nach Anspruch 1, wobei nach dem Einstellen einer Reaktionsverzögerung oder Priorität der ersten Zugriffsschnittstelle von einem ersten Wert auf einen zweiten Wert durch den ersten BRAS das Verarbeitungsverfahren ferner Folgendes umfasst:

Einstellen (303) der Reaktionsverzögerung oder Priorität der ersten Zugriffsschnittstelle durch den ersten BRAS vom zweiten Wert zurück auf den ersten Wert, wenn die Benutzerzugriffsfehlerrate, die der ersten Zugriffsschnittstelle entspricht, unter einem zweiten Schwellenwert liegt, wobei der zweite Schwellenwert unter dem ersten Schwellenwert liegt; und
Reagieren (304) auf die Benutzerzugriffsanforderung durch den ersten BRAS über die erste Zugriffsschnittstelle basierend auf dem ersten Wert.

**3.** Verarbeitungsverfahren nach Anspruch 1 oder 2, wobei die Reaktionsverzögerung der ersten Zugriffsschnittstelle eine erste Reaktionsverzögerung umfasst, und das Einstellen einer Reaktionsverzögerung der ersten Zugriffsschnittstelle von einem ersten Wert auf einen zweiten Wert durch den ersten BRAS Folgendes umfasst:
Einstellen der ersten Reaktionsverzögerung der ersten Zugriffsschnittstelle durch den ersten BRAS von einem ersten Verzögerungswert auf einen zweiten Verzögerungswert, wobei der erste Verzögerungswert kleiner als der zweite Verzögerungswert ist.

**4.** Verarbeitungsverfahren nach Anspruch 3, wobei die erste Reaktionsverzögerung eine Verzögerung umfasst, die einer MAC-Adresse der Medienzugriffssteuerung eines Benutzergeräts entspricht, und die erste Reaktionsverzögerung ein Verzögerungswert ist, der verwendet wird, um auf eine Benutzerzugriffsanforderung zu reagieren, die durch das Benutzergerät gesendet wird.

5. Verarbeitungsverfahren nach Anspruch 1 oder 2, wobei die Reaktionspriorität eine virtuelle Router-Redundanzprotokoll(VRRP)-Priorität umfasst, und das Einstellen einer Reaktionspriorität der ersten Zugriffsschnittstelle von einem ersten Wert auf einen zweiten Wert durch den ersten BRAS umfasst: Einstellen einer an die erste Zugriffsschnittstelle gebundenen VRRP-Priorität durch den ersten BRAS von einer ersten Priorität auf eine zweite Priorität, wobei die erste Priorität höher ist als die zweite Priorität.

6. Verarbeitungsverfahren nach einem der Ansprüche 1 bis 5, wobei das Bestimmen einer Benutzerzugriffsfehlerrate, die einer ersten Zugriffsschnittstelle auf dem ersten BRAS entspricht, durch einen ersten BRAS Folgendes umfasst:

Bestimmen einer Anzahl von Wählfehlern und einer Gesamtanzahl von Wählversuchen eines Benutzergeräts, das über die erste Zugriffsschnittstelle Zugriff erhält, durch den ersten BRAS; und
Bestimmen der Benutzerzugriffsfehlerrate, die der ersten Zugriffsschnittstelle entspricht, durch den ersten BRAS basierend auf der Anzahl von Wählfehlern und der Gesamtmenge von Wählversuchen des Benutzergeräts.

7. Verarbeitungsverfahren nach einem der Ansprüche 1 bis 6, wobei nach dem Einstellen einer Reaktionsverzögerung oder Priorität der ersten Zugriffsschnittstelle von einem ersten Wert auf einen zweiten Wert durch den ersten BRAS das Verarbeitungsverfahren ferner Folgendes umfasst:
Senden einer Verarbeitungsnachricht durch den ersten BRAS an einen zweiten BRAS, wobei die Verarbeitungsnachricht den zweiten BRAS anweist, auf die Benutzerzugriffsanforderung basierend auf einer Reaktionsverzögerung oder Priorität einer zweiten Zugriffsschnittstelle zu reagieren, und eine entsprechende Reaktionsgeschwindigkeit der Reaktion auf die Benutzerzugriffsanforderung durch den zweiten BRAS basierend auf der Reaktionsverzögerung oder Priorität der zweiten Zugriffsschnittstelle schneller ist als eine entsprechende Reaktionsgeschwindigkeit der Reaktion auf die Benutzerzugriffsanforderung durch den ersten BRAS basierend auf dem zweiten Wert.

8. Verarbeitungsverfahren nach einem der Ansprüche 2 bis 7, wobei das Verarbeitungsverfahren ferner Folgendes umfasst:
Konfigurieren des ersten Schwellenwerts oder des zweiten Schwellenwerts durch den ersten BRAS über eine Befehlszeilen-Anweisung.

9. Verarbeitungssystem für den Benutzerzugriff, wobei das Verarbeitungssystem einen ersten BRAS und einen zweiten BRAS umfasst;
der erste BRAS zu Folgendem konfiguriert ist:

Bestimmen einer Benutzerzugriffsfehlerrate, die einer ersten Zugriffsschnittstelle auf dem ersten BRAS entspricht; und
Einstellen einer Reaktionsverzögerung oder Priorität der ersten Zugriffsschnittstelle von einem ersten Wert auf einen zweiten Wert, wenn die Benutzerzugriffsfehlerrate, die der ersten Zugriffsschnittstelle entspricht, größer oder gleich einem ersten Schwellenwert ist, wobei eine entsprechende Reaktionsgeschwindigkeit der Reaktion auf eine Benutzerzugriffsanforderung, die auf dem ersten Wert basiert, schneller ist als eine entsprechende Reaktionsgeschwindigkeit der Reaktion auf die Benutzerzugriffsanforderung, die auf dem zweiten Wert basiert; und
der zweite BRAS zu Folgendem konfiguriert ist:

Reagieren auf eine erste Benutzerzugriffsanforderung basierend auf einer Reaktionsverzögerung oder Priorität einer zweiten Zugriffsschnittstelle, wobei eine entsprechende Reaktionsgeschwindigkeit der Reaktion auf die erste Benutzerzugriffsanforderung durch den zweiten BRAS basierend auf der Reaktionsverzögerung oder Priorität der zweiten Zugriffsschnittstelle schneller ist als eine entsprechende Reaktionsgeschwindigkeit der Reaktion auf die erste Benutzerzugriffsanforderung durch den ersten BRAS basierend auf dem zweiten Wert, und langsamer ist als eine entsprechende Reaktionsgeschwindigkeit der Reaktion auf die erste Benutzerzugriffsanforderung durch den ersten BRAS basierend auf dem ersten Wert; und
wobei die erste Benutzerzugriffsanforderung durch ein Benutzergerät an den ersten und zweiten BRAS auf eine Broadcast-Weise gesendet wird.

10. Verarbeitungssystem nach Anspruch 9, wobei die Reaktionsverzögerung der ersten Zugriffsschnittstelle eine erste Reaktionsverzögerung umfasst; und
der erste BRAS ferner dazu konfiguriert ist, die erste Reaktionsverzögerung der ersten Zugriffsschnittstelle von einem ersten Verzögerungswert auf einen zweiten Verzögerungswert einzustellen, wobei der erste Verzögerungswert kleiner als der zweite Verzögerungswert ist.

11. Verarbeitungssystem nach Anspruch 9, wobei die Reaktionspriorität eine VRRP-Priorität umfasst; und der erste BRAS ferner dazu konfiguriert ist, eine an die erste Zugriffsschnittstelle gebundene VRRP-Priorität von einer ersten Priorität auf eine zweite Priorität einzustellen, wobei die erste Priorität höher ist als die zweite Priorität.

12. Verarbeitungssystem gemäß einem der Ansprüche 9 bis 11, wobei der erste BRAS für Folgendes konfiguriert ist:

Bestimmen einer Anzahl von Wählfehlern und einer Gesamtanzahl von Wählversuchen eines Benutzers, der über die erste Zugriffsschnittstelle Zugriff erhält; und Bestimmen der Benutzerzugriffsfehlerrate, die der ersten Zugriffsschnittstelle entspricht, basierend auf der Anzahl von Wählfehlern und der Gesamtmenge von Wählversuchen des Benutzers.

13. Verarbeitungssystem nach einem der Ansprüche 9 bis 12, wobei

der erste BRAS ferner dazu konfiguriert ist, eine Verarbeitungsnachricht an den zweiten BRAS zu senden, nachdem die Reaktionsverzögerung oder Priorität der ersten Zugriffsschnittstelle von dem ersten Wert auf den zweiten Wert eingestellt wurde; und der zweite BRAS zu Folgendem konfiguriert ist:

die Verarbeitungsnachricht zu empfangen; und Reagieren auf die Benutzerzugriffsanforderung basierend auf der Reaktionsverzögerung oder Priorität der zweiten Zugriffsschnittstelle, wobei die entsprechende Reaktionsgeschwindigkeit der Reaktion auf die Benutzerzugriffsanforderung durch den zweiten BRAS basierend auf der Reaktionsverzögerung oder Priorität der zweiten Zugriffsschnittstelle schneller ist als die entsprechende Reaktionsgeschwindigkeit der Reaktion auf die Benutzerzugriffsanforderung durch den ersten BRAS basierend auf dem zweiten Wert.

14. Computerprogrammprodukt, wobei, wenn Anweisungen auf einem Computer ausgeführt werden, der Computer in die Lage versetzt wird, das Verarbeitungsverfahren gemäß einem der Ansprüche 1 bis 8 durchzuführen.

15. Computerlesbares Speichermedium, wobei der Computer, wenn Anweisungen auf einem Computer ausgeführt werden, in die Lage versetzt wird, das Verarbeitungsverfahren gemäß einem der Ansprüche 1 bis 8 durchzuführen.

**Revendications**

1. Procédé de traitement d'un accès d'utilisateur, dans lequel le procédé de traitement comprend :

la détermination (201 ; 301 ; 402), par un premier serveur d'accès distant large bande, BRAS, d'un taux d'échec d'accès d'utilisateur correspondant à une première interface d'accès sur le premier BRAS ; et l'ajustement (202 ; 302 ; 403), par le premier BRAS, d'un retard de réponse ou d'une priorité de la première interface d'accès d'une première valeur à une seconde valeur lorsque le taux d'échec d'accès d'utilisateur correspondant à la première interface d'accès est supérieur ou égal à un premier seuil, une vitesse de réponse correspondante de réponse à une demande d'accès d'utilisateur sur la base de la première valeur étant plus rapide qu'une vitesse de réponse correspondante de réponse à la demande d'accès d'utilisateur sur la base de la seconde valeur, la réponse (404), par un second BRAS, à une première demande d'accès d'utilisateur sur la base d'un retard de réponse ou d'une priorité d'une seconde interface d'accès, une vitesse de réponse correspondante de réponse à la première demande d'accès d'utilisateur par le second BRAS sur la base du retard de réponse ou de la priorité de la seconde interface d'accès étant plus rapide qu'une vitesse de réponse correspondante de réponse à la première demande d'accès d'utilisateur par le premier BRAS sur la base de la seconde valeur, et étant plus lente qu'une vitesse de réponse correspondante de réponse à la demande d'accès d'utilisateur par le premier BRAS sur la base de la première valeur ; et dans lequel la première demande d'accès d'utilisateur est envoyée par un équipement utilisateur aux premier et second BRAS en mode de radiodiffusion.

2. Procédé selon la revendication 1, dans lequel après l'ajustement, par le premier BRAS, d'un retard de réponse ou d'une priorité de la première interface d'accès d'une première valeur à une seconde valeur, le procédé de traitement comprend également :

l'ajustement (303), par le premier BRAS, du retard de réponse ou de la priorité de la première interface d'accès inversement de la seconde valeur à la première valeur lorsque le taux d'échec d'accès d'utilisateur correspondant à la première interface d'accès est inférieur à un second seuil, le second seuil étant inférieur au premier seuil ; et

la réponse (304), par le premier BRAS, à la demande d'accès d'utilisateur par la première interface d'accès sur la base de la première valeur.

3. Procédé de traitement selon la revendication 1 ou 2, dans lequel le retard de réponse de la première interface d'accès comprend un premier retard de réponse, et l'ajustement, par le premier BRAS, d'un retard de réponse de la première interface d'accès d'une première valeur à une seconde valeur comprend :

l'ajustement, par le premier BRAS, du premier retard de réponse de la première interface d'accès d'une première valeur de retard à une seconde valeur de retard, la première valeur de retard étant inférieure à la seconde valeur de retard.

4. Procédé de traitement selon la revendication 3, dans lequel le premier retard de réponse comprend un retard correspondant à une adresse MAC de commande d'accès au support d'un équipement d'utilisateur et le premier retard de réponse est une valeur de retard utilisée pour répondre à une demande d'accès d'utilisateur envoyée par l'équipement utilisateur.

5. Procédé de traitement selon la revendication 1 ou 2, dans lequel la priorité de réponse comprend une priorité VRRP de protocole de redondance de routeur virtuel, et l'ajustement, par le premier BRAS, d'une priorité de réponse de la première interface d'accès d'une première valeur à une seconde valeur comprend :

l'ajustement, par le premier BRAS, d'une priorité VRRP liée à la première interface d'accès d'une première priorité à une seconde priorité, la première priorité étant supérieure à la seconde priorité.

6. Procédé de traitement selon l'une quelconque des revendications 1 à 5, dans lequel la détermination, par un premier BRAS, d'un taux d'échec d'accès d'utilisateur correspondant à une première interface d'accès sur le premier BRAS comprend :

la détermination, par le premier BRAS, d'un nombre d'échecs de numérotation et d'un nombre total de tentatives de numérotation d'un équipement d'utilisateur qui obtient l'accès par la première interface d'accès ; et

la détermination, par le premier BRAS, du taux d'échecs d'accès d'utilisateur correspondant à la première interface d'accès sur la base du nombre d'échecs de numérotation et du nombre total de tentatives de numérotation de l'équipement d'utilisateur.

7. Procédé de traitement selon l'une quelconque des revendications 1 à 6, dans lequel après l'ajustement, par le premier BRAS, d'un retard de réponse ou d'une priorité de la première interface d'accès d'une première valeur à une seconde valeur, le procédé de traitement comprend également :

l'envoi, par le premier BRAS, d'un message de traitement à un second BRAS, le message de traitement indiquant au second BRAS de répondre à la demande d'accès d'utilisateur sur la base d'un retard de réponse ou d'une priorité d'une seconde interface d'accès, et une vitesse de réponse correspondante de réponse à la demande d'accès d'utilisateur par le second BRAS sur la base du retard de réponse ou de la priorité de la seconde interface d'accès est plus rapide qu'une vitesse de réponse correspondante de réponse à la demande d'accès d'utilisateur par le premier BRAS sur la base de la seconde valeur.

8. Procédé de traitement selon l'une quelconque des revendications 2 à 7, dans lequel le procédé de traitement comprend également :

la configuration, par le premier BRAS, du premier seuil ou du second seuil au moyen d'une instruction de ligne de commande.

9. Système de traitement d'un accès d'utilisateur, le système de traitement comprenant un premier BRAS et un second BRAS ;

le premier BRAS est configuré pour :

déterminer un taux d'échec d'accès d'utilisateur correspondant à une première interface d'accès sur le premier BRAS ; et

ajuster un retard de réponse ou une priorité d'une première interface d'accès d'une première valeur à une seconde valeur lorsque le taux d'échec d'accès d'utilisateur est supérieur ou égal à un premier seuil, une vitesse de réponse correspondante de réponse à une demande d'accès d'utilisateur sur la base de la première valeur étant plus rapide qu'une vitesse de réponse correspondante de réponse à la demande d'accès d'utilisateur sur la base de la seconde valeur ; et

le second BRAS est configuré pour :

répondre à une première demande d'accès d'utilisateur sur la base d'un retard de réponse ou d'une priorité d'une seconde interface d'accès, une vitesse de réponse correspondante de réponse à la première demande d'accès d'utilisateur par le second BRAS sur la base du retard de réponse ou de la priorité de la seconde interface d'accès étant plus rapide qu'une vitesse de réponse correspondante de réponse à la première demande d'accès d'utilisateur par le premier BRAS sur la base de la seconde valeur, et étant plus lente qu'une vitesse de réponse correspondante de réponse à la première demande d'accès d'utilisateur par le premier BRAS sur la base de la première valeur ; et

dans lequel la première demande d'accès d'utilisateur est envoyée par un équipement d'utilisateur aux premier et second BRAS en mode de radiodiffusion.

10. Système de traitement selon la revendication 9, dans lequel le retard de réponse de la première interface d'accès comprend un premier retard de réponse ; et

le premier BRAS est également configuré pour ajuster le premier retard de réponse de la première interface d'accès d'une première valeur de retard à une seconde valeur de retard, la première valeur de retard étant inférieure à la seconde valeur de retard.

11. Système de traitement selon la revendication 9, dans lequel la priorité de réponse comprend une priorité VRRP de protocole de redondance de routeur virtuel ; et

le premier BRAS est également configuré pour ajuster une priorité VRRP liée à la première interface d'accès d'une première priorité à une seconde priorité, la première priorité étant supérieure à la seconde priorité.

12. Système de traitement selon l'une quelconque des revendications 9 à 11, dans lequel le premier BRAS est configuré pour :

déterminer un nombre d'échecs de numérotation et un nombre total de tentatives de numérotation d'un utilisateur qui obtient l'accès par la première interface d'accès ; et
déterminer le taux d'échecs d'accès d'utilisateur correspondant à la première interface d'accès sur la base du nombre d'échecs de numérotation et du nombre total de tentatives de numérotation de l'utilisateur.

13. Système de traitement selon l'une quelconque des revendications 9 à 12, dans lequel

le premier BRAS est également configuré pour envoyer un message de traitement au second BRAS après ajustement du retard de réponse ou de la priorité de la première interface d'accès de la première valeur à la seconde valeur ; et le second BRAS est configuré pour :

recevoir le message de traitement ; et
répondre à la demande d'accès d'utilisateur sur la base du retard de réponse ou de la priorité de la seconde interface d'accès, la vitesse de réponse correspondante de réponse à la demande d'accès d'utilisateur par le second BRAS sur la base du retard de réponse ou de la priorité de la seconde interface d'accès étant plus rapide que la vitesse de réponse correspondante de réponse à la demande d'accès d'utilisateur par le premier BRAS sur la base de la seconde valeur.

14. Produit de programme informatique, dans lequel lorsque les instructions sont exécutées sur un ordinateur, l'ordinateur est activé pour exécuter le procédé de traitement selon l'une quelconque des revendications 1 à 8.

15. Support de stockage lisible par ordinateur, dans lequel, lorsque les instructions sont exécutées sur un ordinateur, l'ordinateur est activé pour réaliser le procédé de traitement selon l'une quelconque des revendications 1 à 8.

FIG. 1

A first BRAS determines a user access failure rate corresponding to a first access interface on the first BRAS — 201

The first BRAS adjusts a response threshold of the first access interface from a first value to a second value when the user access failure rate corresponding to the first access interface is greater than or equal to a first threshold, where a corresponding response speed of responding to a user access request based on the first value is faster than a corresponding response speed of responding to the user access request based on the second value — 202

FIG. 2

A first BRAS determines a user access failure rate corresponding to a first access interface on the first BRAS — 301

The first BRAS adjusts a response threshold of the first access interface from a first value to a second value when the user access failure rate corresponding to the first access interface is greater than or equal to a first threshold, where a corresponding response speed of responding to a user access request based on the first value is faster than a corresponding response speed of responding to the user access request based on the second value — 302

After adjusting the response threshold of the first access interface from the first value to the second value, the first BRAS adjusts the response threshold of the first access interface from the second value back to the first value when the user access failure rate corresponding to the first access interface is less than a second threshold, where the second threshold is less than the first threshold — 303

The first BRAS responds to the user access request through the first access interface based on the first value — 304

FIG. 3

```
  ┌──────────┐          ┌──────────┐          ┌──────────┐
  │  User    │          │          │          │  Second  │
  │equipment │          │First BRAS│          │   BRAS   │
  └──────────┘          └──────────┘          └──────────┘
```

401. Send a user access request

401. Send a user access request

402. The first BRAS determines a user access failure rate corresponding to a first access interface on the first BRAS

403. The first BRAS adjusts a response threshold of the first access interface from a first value to a second value when the user access failure rate corresponding to the first access interface is greater than or equal to a first threshold, where a corresponding response speed of responding to the user access request based on the first value is faster than a corresponding response speed of responding to the user access request based on the second value

404. Respond to the user access request based on a response value of a second access interface, where a corresponding response speed of responding to the user access request by the second BRAS based on the response value of the second access interface is faster than a corresponding response speed of responding to the user access request by the first BRAS based on the second value

FIG. 4

First BRAS

| Determining unit | 501 | Adjustment unit | 502 |

FIG. 5

First BRAS

| Determining unit | 501 | Adjustment unit | 502 | Response unit | 503 |

FIG. 6

Processing system

| First BRAS | Second BRAS |

FIG. 7

FIG. 8

**EP 4 307 631 B1**

## REFERENCES CITED IN THE DESCRIPTION

**Patent documents cited in the description**

- CN 202110281152

- CN 106685818 A